# EUROPÄISCHE PATENTSCHRIFT

(11) **EP 3 093 937 B1**
(45) Veröffentlichungstag und Bekanntmachung des Hinweises auf die Patenterteilung: **19.09.2018**
(21) Anmeldenummer: 15167574.1
(22) Anmeldetag: 13.05.2015
(51) Int. Cl.: H02G 3/12

(54) **SOCKELTEIL FÜR ELEKTRISCHE INSTALLATIONSGERÄTE**
BASE SECTION FOR ELECTRIC INSTALLATION DEVICES
PARTIE DE SOCLE POUR APPAREILS D'INSTALLATION ÉLECTRIQUES

(43) Veröffentlichungstag der Anmeldung: 16.11.2016
(73) Patentinhaber: GIRA GIERSIEPEN GmbH & Co. KG, 42477 Radevormwald (DE)
(72) Erfinder: Beek, Stefan, 42277 Wuppertal (DE)
(74) Vertreter: Patent- und Rechtsanwälte Dr. Solf & Zapf

(56) Entgegenhaltungen:
- EP-A1- 0 915 537
- EP-A2- 1 187 285
- DE-A1- 2 328 393
- DE-A1- 4 032 142
- DE-C1- 4 125 767
- DE-U1- 29 901 709
- DE-U1- 29 918 584

## Beschreibung

Die vorliegende Erfindung betrifft ein Sockelteil für ein elektrisches Installationsgerät, wie z. B. einen Lichtschalter oder einer Steckdose, umfassend ein Sockelunterteil sowie mindestens eine an dessen Umfang angeordnete Spreizkrallenanordnung mit einer Spreizkralle und einer durch eine Öffnung der Spreizkralle verlaufenden, in das Sockelunterteil eingeschraubten Spreizschraube, wobei die Spreizkralle mit ihrem Lagersteg derart mit der Spreizschraube verbunden ist, dass durch Eindrehen der Spreizschraube in das Sockelunterteil eine gegenüber dem Sockelkörper umfangsgemäß vorstehende Spreizstellung der Spreizkralle und durch Herausdrehen der Spreizschraube eine umfangsgemäß versenkte Montagestellung der Spreizkralle einstellbar ist, und wobei die Spreizkralle in beiden Stellungen gegen Herausfallen aus dem Sockelunterteil gesichert ist, wobei zwischen einem endseitigen Schraubenkopf der Spreizschraube und einem am Schraubenschaft gelagerten Mitnehmerteil der Lagersteg geführt ist, wobei das Mitnehmerteil am Schraubenschaft befestigt ist.

Aus der DE 40 32 142 A1 ist ein gattungsgemäßes Sockelteil bekannt. Das Mitnehmerteil ist als ein an dem Schraubenschaft der Spreizschraube angeformter Ring oder als eine mit dem Schraubenschaft unverlierbar verpresste Scheibe ausgebildet. Dies erfordert eine aufwändige Herstellung der Spreizschraube.

Aus der DE 299 18 584 U1 ist ein weiteres Sockelteil bekannt. Das Mitnehmerteil ist als eine auf den Schraubenschaft der Spreizschraube aufgesetzte Federhülse mit seitlich angeformten Flügeln zum Bewegen des Lagerstegs ausgebildet. Dies erfordert eine aufwändige Herstellung der Federhülse und einen komplizierten Zusammenbau des Sockelteils.

Aus der EP 0 915 537 A1 ist ein Sockelteil bekannt, bei dem der Lagersteg der Spreizkralle an der Spreizschraube über eine in dem Sockelteil gelagerte Spange gehalten wird. Die Montage der Spange und die Lagerung im Sockelteil sind kompliziert.

Die EP 1 187 285 A2 beschreibt ein weiteres Sockelteil mit einer Spreizkralle. Der Lagersteg der Spreizkralle wird mittels einer auf der Spreizschraube aufgeschraubten Gewindescheibe mitgenommen, wobei an die Gewindescheibe ein Steg angeformt ist, der über einen am Sockelteil angeformten Vorsprung geführt wird und diesen in einer Endposition hintergreift und damit die Spreizkralle in ihrer Endposition blockiert.

Die DE 299 01 709 U1 beschreibt ein Sockelteil mit mindestens einer Spreizkralle, die über deren Halteschenkel mittels einer Stellschraube am Tragrahmen gehalten ist, und auf deren Krallenschenkel von außen ein Federelement wirkt. Das Federelement ist eine U- oder V-förmige Spreizfeder, die über deren Federschenkel am Tragrahmen des Sockelteils gehalten ist, und deren die Federschenkel verbindendes Federjoch am Krallenschenkel anliegt.

Die DE 41 25 767 C1 zeigt einen Tragring für einen Sockel, der auf gegenüberliegenden Seiten je eine zweischenkelige Spreizkralle aufweist. Diese kann mittels einer Stellschraube aus einer Ruhelage in eine Arbeitslage überführt werden. In der Arbeitslage wirken die Krallen mit benachbarten Bereichen einer Wand, wie der Wand einer Unterputzdose zusammen. Es sind ferner Rückstellmittel zum Überführen der Spreizkralle in die Ruhelage vorhanden. Erfindungsgemäß ist als Rückstellmittel ein nach seinem Aushärten gummielastischer Körper, insbesondere ein Silicongummikörper benutzbar. Dieser ist einerseits mit Teilen der Spreizkralle und andererseits mit dem Tragring oder mit dessen Verbindungssteg verbunden. Bei dem Verfahren zum Anbringen der Spreizkralle an dem elektrischen Installationsgerät wird so vorgegangen, daß zunächst ein pastenförmiger Ausgangswerkstoff von Silicongummi aufgebracht wird. Dieses Aufbringen des pastenförmigen Ausgangswerkstoffes geschieht dann, wenn die Spreizkralle durch äußere Kräfte, z. B. durch besondere Halteeinrichtungen, sich in ihrer Ruhelage befindet. Das Aufbringen der Paste geschieht derart, dass sowohl Bereiche der Spreizkralle als auch Bereiche des Verbindungssteges des Tragringes erfaßt werden. Im Anschluß daran erfolgt in einem nächsten Verfahrensschritt, gegebenenfalls unter Zufuhr von Wärme, ein Aushärten der aufgebrachten Paste.

Die DE 23 28 393 A1 offenbart eine Abzweig- und Gerätedose für Elektroinstallationen, für den Einbau in Massiv- und/oder Leichtbauwände, wobei die Dose an zwei sich gegenüberliegenden Seiten des Dosenmantels, sich nach außen verjüngende, vorzugsweise U-förmig profilierte, Schienenkanäle besitzt, wodurch von Spannschrauben zu bewegende Dübel diagonal nach außen/oben heraustreten, wobei sie sich gegen die Innenfläche einer ausgebohrten Ausnahme verspannen.

Ein weiteres Sockelunterteil bzw. ein Sockel ist aus der DE 10 2010 036 880 B4 bekannt. Bei diesem bekannten Sockelunterteil weist der Lagersteg der Spreizkralle zumindest ein von einer Normalstellung in eine Sperrstellung bringbares Sperrglied auf. Dieses Sperrglied ist wippenartig verschwenkbar an dem Lagersteg angeformt. Diese Ausbildung der Spreizkralle ist herstellungsmäßig aufwändig. Zudem kann ein Lösen des Sperrglieds bei Erschütterungen nicht ausgeschlossen werden, so dass ein Herausfallen der Spreizkrallenanordnung aus dem Sockelunterteil während des Transports möglich ist.

Der vorliegenden Erfindung liegt die Aufgabe zu Grunde, ein Sockelteil bzw. ein Sockelunterteil mit einer Spreizkrallenanordnung zur Verfügung zu stellen, die einfach herstellbar ist und darüber hinaus eine Unverlierbarkeit der Spreizkralle im montierten Zustand sicherstellt.

Erfindungsgemäß wird dies dadurch erreicht, dass die Öffnung im Lagersteg als Langloch ausgebildet ist, dessen Längsachse senkrecht zur Längsachse des Lagerstegs verläuft, und das Mitnehmerteil derart am Schraubenschaft befestigt ist, dass das Mitnehmerteil mit dem Schraubenschaft umfangsgemäß kraftschlüssig und in axialer Richtung formschlüssig fixiert ist, und das Mitnehmerteil als O-Ring aus einem elastisch verformbaren Material ausgebildet ist, dessen Innendurchmesser kleiner ist als der Gewindeaußendurchmesser der Spreizschraube. Diese erfindungsgemäße Ausgestaltung der Spreizkrallenanordnung bewirkt, dass über das Mitnehmerteil beim Herausschrauben des Schraubenschaftes aus dem Sockelunterteil über das Mitnehmerteil, das auf dem Schraubenschaft fixiert ist, eine Mitnahme des Lagersteges erfolgt, so dass dieser aus der Spreizstellung, in der die maximale Spreizung der Spreizkralle gegeben ist, in die Montagestellung der Spreizkrallen verschwenkt wird. Beim Einschrauben der Spreizschraube für die Einnahme der maximalen Spreizstellung der Spreizkralle erfolgt die Mitnahme des Lagersteges über den anliegenden Schraubenkopf. Zudem wird durch das Mitnehmerteil sichergestellt, dass auch bei einem versehentlichen vollständigen Herausdrehen der Spreizschraube aus dem Sockelunterteil ein Herausfallen verhindert wird, wenn auf dem Sockelunterteil ein Sockeloberteil befestigt ist. Die Spreizschraube ist zudem mit der Spreizkralle in Verbindung mit dem auf dem Schraubenschaft befindlichen Mitnehmerteil unverlierbar verbunden. Bei einem derartigen O-Ring handelt es sich um ein marktübliches Einzelteil, so dass sich somit geringe Herstellungskosten ergeben, und zudem kann die erfindungsgemäß verwendete Spreizkralle als Stanzbiegeteil hergestellt werden. Durch die Verwendung von elastisch verformbarem Material für das Mitnehmerteil wird zudem sichergestellt, dass ein Rappel- und Klapperschutz gegeben ist, wenn sich die erfindungsgemäße Spreizkrallenanordnung im Montagezustand befindet.

Erfindungsgemäß ist es zweckmäßig, wenn das Verhältnis des Innendurchmessers des vorteilhafterweise verwendeten O-Rings zum Gewindeaußendurchmesser des Gewindes der Spreizschraube 1 : 2 beträgt.

Weiterhin ist es von Vorteil, wenn als Spreizschraube eine selbstformende Schraube verwendet wird, hierdurch wird erreicht, dass sich die Spreizschraube ihr Gegengewinde im Sockelunterteil selber herstellt, so dass zusätzliche Schraubhülseneinsätze im Sockelunterteil entfallen können. Erfindungsgemäß ist es weiterhin von Vorteil, wenn die erfindungsgemäße Spreizschraube eine große Gewindesteigung aufweist, so dass mit wenigen Umdrehungen, günstigstenfalls mit einer Umdrehung von der Lösestellung in die Spreizstellung und umgekehrt geschraubt werden kann. Zudem kann es von Vorteil sein, wenn das Gewinde als mehrgängiges Gewinde ausgebildet ist.

Vorteilhafterweise werden an dem Sockelunterteil zwei um 180 ° zueinander versetzt angeordnete Spreizkrallenanordnungen vorgesehen, die in Lageransätzen des Sockelunterteils gelagert sind.

Erfindungsgemäß kann es von Vorteil sein, wenn an einer Vorderkante des Lagerstegs der Spreizkralle ein Stegfortsatz angeformt ist, der mit dem Lagersteg einen stumpfen Winkel einschließt, so dass er in Richtung auf den Lageransatz des Sockelunterteils geneigt verläuft. Dieser Stegfortsatz bildet im Winkelbereich zum Lagersteg das Gegenlager für eine am Lageransatz gebildete Lagerkante.

Es kann von Vorteil sein, wenn am Lagersteg, dem Stegfortsatz gegenüberliegend ein Stegansatz angeformt ist, in dem sich das Langloch erstreckt und der nach unten derart abgewinkelt ist, dass er mit dem Lagersteg einen stumpfen Winkel einschließt, so dass er in Richtung auf den Lageransatz geneigt verläuft. Durch die Weiterführung des Langlochs in diesen Stegansatz wird die Führung des Lagerstegs über den gesamten Schwenkbereich sichergestellt.

Weitere vorteilhafte Ausgestaltungen des Sockelunterteils bzw. des Sockelteils gemäß dem Anspruch 1 sind in den Unteransprüchen 10 bis 21 enthalten. Hierbei können die Merkmale der jeweiligen Unteransprüche unabhängig voneinander mit den Merkmalen des Anspruchs 1 kombiniert werden und ebenfalls unabhängig von den Merkmalen der Unteransprüche 2 bis 9.

Die vorliegende Erfindung bezieht sich auch auf ein Sockelteil, bestehend aus einem erfindungsgemäßen Sockelunterteil und einem erfindungsgemäßen Sockeloberteil, das mit dem Sockelunterteil über insbesondere eine Rastverbindung lösbar verbunden ist.

An Hand des in den beiliegenden Zeichnungen dargestellten Ausführungsbeispiels wird die Erfindung näher erläutert. Es zeigen:
- Fig. 1: eine perspektivische Ansicht eines erfindungsgemäßen Sockelteils im montierten Zustand,
- Fig. 2: eine perspektivische Ansicht eines erfindungsgemäßen Sockelunterteils mit montierter Spreizkrallenanordnung,
- Fig. 2a: eine perspektivische Explosionsansicht einer Spreizkrallenanordnung nach der Erfindung,
- Fig. 3: eine perspektivische Ansicht eines erfindungsgemäßen Sockelteils, bestehend aus einem Sockelunterteil gemäß Fig. 1 und einem Sockeloberteil in Explosionsdarstellung vor der Montage,
- Fig. 4: eine perspektivische Ansicht eines erfindungsgemäßen Sockelunterteils,
- Fig. 5a bis 5g: Schnitte entlang der Schnittlinie III-III in Fig. 1 zur Darstellung der unterschiedlichen Montageschritte zur Montage einer erfindungsgemäßen Spreizkrallenanordnung in einem Sockelunterteil und
- Fig. 6: eine Aufsicht auf das Sockelteil gemäß Fig. 1.

In den verschiedenen Figuren der Zeichnung sind gleiche Teile stets mit denselben Bezugszeichen versehen.

Zu der anschließenden Beschreibung wird ausdrücklich beansprucht, dass die Erfindung nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich und auch in Kombination mit anderen Merkmalen sowie auch unabhängig von den Merkmalskombinationen und Rückbeziehungen der Ansprüche eine erfinderische Bedeutung in Verbindung mit dem Gegenstand des Anspruchs 1 haben.

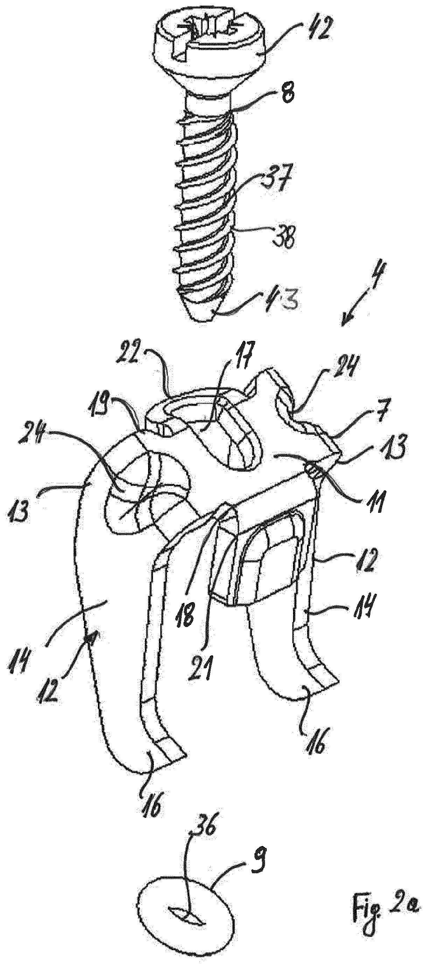

Wie in Fig. 3 dargestellt, umfasst ein erfindungsgemäßes Sockelteil 1 ein Sockelunterteil 2 und ein Sockeloberteil 3, wobei das Sockeloberteil 3 mit dem Sockelunterteil 2 vorzugsweise lösbar verbunden ist.

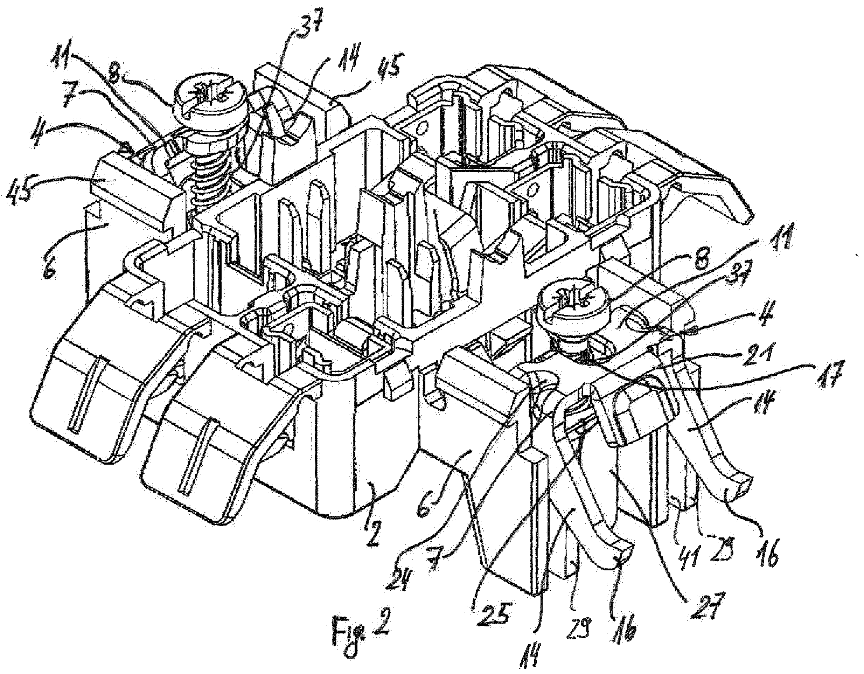

Ein erfindungsgemäßes Sockelunterteil 2, siehe Fig. 3, weist an seinem Umfang mindestens eine Spreizkrallenanordnung 4, vorzugsweise zwei zueinander um 180 ° versetzt angeordnete Spreizkrallenanordnungen 4 auf. Zum Befestigen der Spreizkrallenanordnung 4 besitzt das Sockelunterteil 2 einen zugeordneten Lageransatz 6. Die Spreizkrallenanordnung 4, siehe Fig. 2, wird gebildet aus einer Spreizkralle 7, einer Spreizschraube 8 und einem Mitnahmeteil 9.

Die Spreizkralle 7 umfasst gemäß der Erfindung einen Lagersteg 11, an dem mindestens ein Krallenarm 12, vorzugsweise zwei zueinander beabstandete Krallenarme 12 angeformt ist/sind. Vorzugsweise ist der jeweilige Krallenarm 12 mit einem sich an den Lagersteg 11 anschließenden ersten Armabschnitt 13 um 90 ° zum Lagersteg 11 abgewinkelt. An dem ersten Armabschnitt 13 schließt sich ein zweiter Armabschnitt 14 an, der mit dem ersten Armabschnitt 13 einen stumpfen Winkel vorzugsweise von 120 ° bis 140 ° einschließt. Der zweite Armabschnitt 14 weist endseitig eine Krallenspitze 16 auf.

In dem Lagersteg 11 ist insbesondere mittig ein Langloch 17 ausgebildet, dessen Längsachse senkrecht zur Längsachse des Lagerstegs 11 verläuft. Der Lagersteg 11 besitzt eine Vorderkante 18, die der Krallenspitze 16 zugekehrt ist, und eine gegenüberliegende Rückkante 19. Vorzugsweise ist an der Vorderkante 18 zwischen den zwei Krallenarmen 12 ein Stegfortsatz 21 angeformt. Dieser Stegfortsatz 21 ist in Richtung auf den Lageransatz 6 nach unten derart abgewinkelt, dass er mit dem Lagersteg 11 einen stumpfen Winkel einschließt und gleichgerichtet zu den Krallenarmen 12 verläuft. An seiner Rückkante 19 weist der Lagersteg 11 einen vorzugsweise endseitig abgerundeten Stegansatz 22 auf, in den sich das Langloch 17 hinein erstreckt. Der Stegansatz 22 ist in Richtung auf den Lageransatz 16 gegenüber dem Lagersteg 11 nach unten abgewinkelt, so dass der Stegansatz 22 mit dem Lagersteg 11 einen stumpfen Winkel einschließt. Der Stegansatz 22 liegt dem Stegfortsatz 21 vorzugsweise gegenüber. Vorteilhafterweise besitzt der Lagersteg 11 insbesondere im Verlauf seiner Längsachse im Übergangsbereich zu dem ersten Armabschnitt 13 eine Einprägung 24, so dass an der Unterseite des Lagerstegs 11 eine Ausbuchtung gebildet ist, wodurch eine Versteifung im Winkelbereich zwischen Lagersteg 11 und Armabschnitt 13 erreicht wird. Vorteilhafterweise ist die erfindungsgemäße Spreizkralle 7 als metallisches Stanzbiegeteil hergestellt.

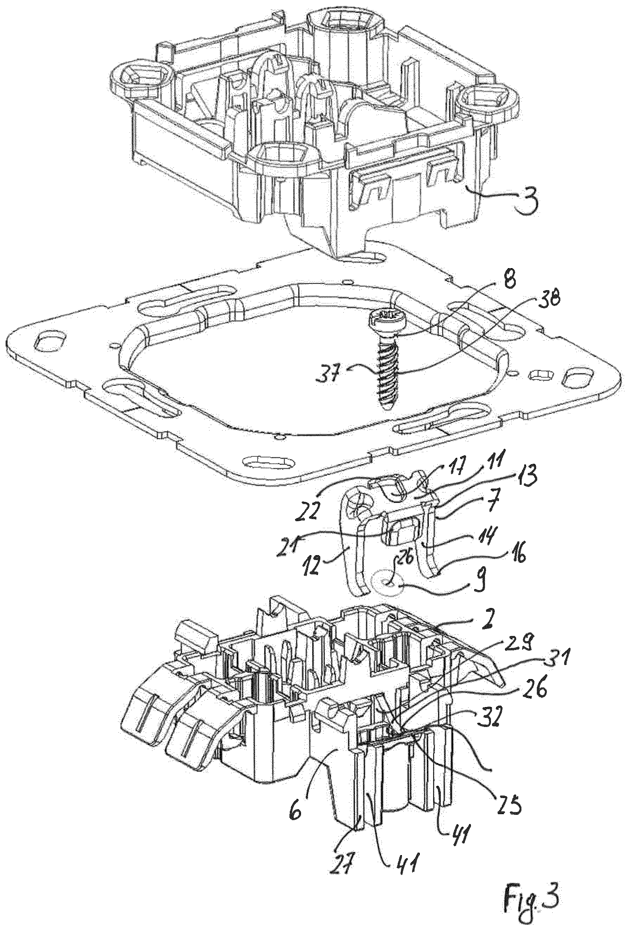

Der Lageransatz 6 des Sockelunterteils 2 ist derart ausgebildet, siehe Fig. 4, dass die Spreizkralle 7 mit ihrem Lagersteg 11 von oben auf den Lageransatz 6, d. h. auf seine Oberfläche 26, aufgelegt werden kann. Der Lageransatz 6 besitzt eine vordere Lagerkante 25 am Übergang seiner Oberfläche 26 zu seiner äußeren Seitenwand 27. Ausgehend von der Lagerkante 25 verläuft seine Oberfläche 26 mit einer Neigung schräg nach innen in den Lageransatz 6 hinein. Durch den Lageransatz 6 verläuft in vertikaler Richtung eine Einschrauböffnung 28, die vorzugsweise als Durchgangsöffnung ausgebildet ist, und in die die Spreizschraube 8 mit ihrem Schraubenschaft 37 eingeschraubt wird. Der Lageransatz 6 besitzt insbesondere senkrecht zur äußeren Seitenwand 27 verlaufende Querwände 29, deren obere Wandkante 31 auf Grund des geneigten Verlaufs der Oberfläche 26 ebenfalls geneigt verläuft und mit der Seitenwand 27 einen spitzen Winkel einschließt. Die Querwände 29 und die Seitenwand 27 umschließen eine innere Ausnehmung 32 in dem Lageransatz 6, in deren Grundfläche 33 eine Vertiefung 34 um die Einschrauböffnung 28 herum eingeformt ist. Die Vertiefung 34 ist vorzugsweise ringförmig und koaxial zur Einschrauböffnung 28 angeordnet. Die Vertiefung 34 dient zur Aufnahme des Mitnehmerteils 9 bei der Montage der erfindungsgemäßen Spreizkrallenanordnung 4. Die Vertiefung 34 besitzt unterhalb der Lagerkante 25 eine gegenüber dem Grund der Vertiefung 34 vorstehende Nase 35, so dass durch die auf Grund der Nase 35 entstehende einseitige Erhöhung eine Schrägstellung des Mitnehmerteils 9 in seiner in der Vertiefung 34 liegenden Einbaulage vorhanden ist.

Das erfindungsgemäße Mitnehmerteil 9 ist vorzugsweise mit einem Durchgangsloch 36 für die Spreizschraube 8 ausgebildet. Das Mitnehmerteil 9 besteht zumindest im Einschraubbereich der Spreizschraube 8 aus elastisch verformbarem Material bzw. ist im Einschraubbereich elastisch verformbar. Vorzugsweise besteht das Mitnehmerteil 9 aus einem O-Ring aus elastisch verformbaren Kunststoff oder Gummi, wobei der Durchmesser des Durchgangslochs 26 kleiner ist als der Gewindeaußendurchmesser des auf dem Schraubenschaft 37 der Spreizschraube 8 ausgebildeten Gewindes 38. Der vorteilhafterweise verwendete O-Ring, der das Mitnehmerteil 9 bildet, besteht insbesondere aus Nitril-Butadien-Kautschuk mit einer Shore-Härte 70. Der O-Ring besitzt z. B. einen Innendurchmesser von 1,5 mm und einen Außendurchmesser von 5,5 mm, so dass sich ein Schnurdurchmesser von 2,0 mm ergibt. Durch die erfindungsgemäße Ausbildung des Mitnehmerteils 9 sitzt dieses, wenn die Spreizschraube 8 mit ihrem Schraubenschaft 37 durch das Mitnehmerteil 9 hindurch geschraubt ist, im Falle eines O-Rings durch das Durchgangsloch des O-Rings, auf dem Schraubenschaft 37 umfangsgemäß kraftschlüssig und in axialer Richtung bedingt durch das Gewinde 38 formschlüssig.

Es ist von Vorteil, wenn die Spreizkralle 7 derartig ausgestaltet ist, dass sie im lose auf die Oberfläche 26 des Lageransatzes 6 mit ihrem Lagersteg 11 aufgelegten Zustand derart mit ihrem Schwerpunkt ausgerichtet ist, dass das im Lagersteg 11 befindliche Langloch 17 eine horizontale Lage einnimmt. Hierdurch verläuft die Längsachse des Langlochs 17 senkrecht zur Längsachse der Einschrauböffnung 28. In Anpassung an die Ausbuchtungen 24 am Lagersteg 11 sind in den oberen Wandkanten 31 der Querwände 29 Einbuchtungen 39 vorhanden. Vorteilhafterweise ist das Verhältnis von Innendurchmesser des Durchgangsloches 36 im Mitnehmerteil 9 zum Gewindeaußendurchmesser der Spreizschraube 8 1 : 2.

Erfindungsgemäß kann es vorteilhaft sein, wenn die Spreizschraube 8 als gewindeformende Schraube ausgebildet ist, so dass sie sich ein Gegengewinde in der Einschrauböffnung 28 selber formt. Um ein Einschrauben und Ausschrauben der Spreizschraube 8 mit wenigen Umdrehungen, z. B. einer bis zwei Umdrehungen, zu erreichen, ist es von Vorteil, wenn das Gewinde eine entsprechende, d. h. große Gewindesteigung besitzt. Erfindungsgemäß kann eine mehrgängige, zum Beispiel dreigängige Ausbildung des Gewindes vorgesehen werden. Die Spreizschraube 8 weist eine Schraubenspitze 43 auf und dieser gegenüberliegend einen Schraubenkopf 42. Zweckmäßigerweise ist der Durchmesser des Schraubenkopfes 42 größer als die Breite des Langlochs 17.

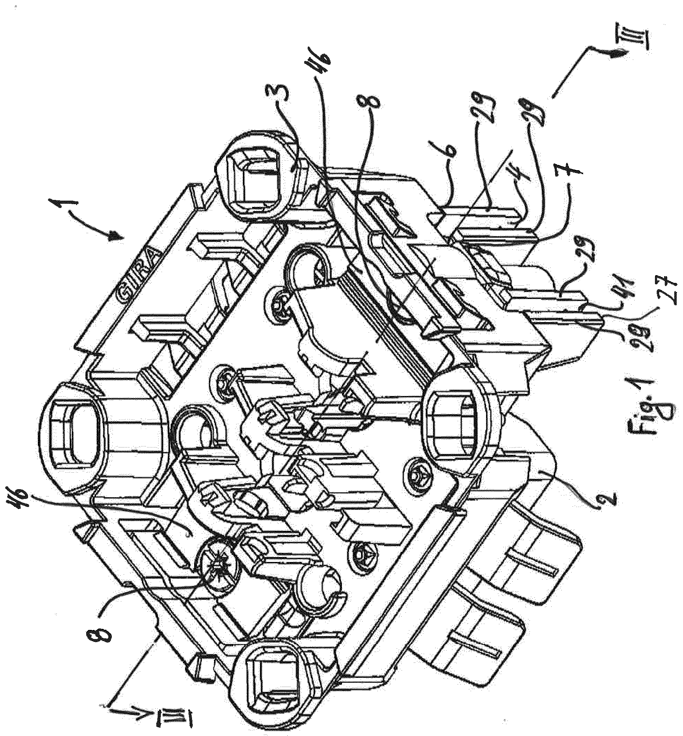

Das Sockelunterteil 3 weist zweckmäßigerweise seitlich der Querwände 29 eine Aufnahmenut 41 auf, deren Tiefe derart bemessen ist, dass der jeweilige Krallenarm 12 im Montagezustand, d. h. in seiner eingeschwenkten Lage, vollständig innerhalb der Aufnahmenut 41 aufgenommen wird, siehe Fig. 1, so dass die Spreizkrallen 7 nicht insbesondere mit ihren Krallenspitzen 16 über den Außenumfang des Sockelunterteils 2 vorstehen. Hierdurch ist eine ungehinderte Montage des erfindungsgemäßen Sockels in einer Montagedose, z. B. einer Unterputzdose oder dergleichen möglich, und darüber hinaus wird auch eine Verletzungsgefahr bei dem Monteur vermieden.

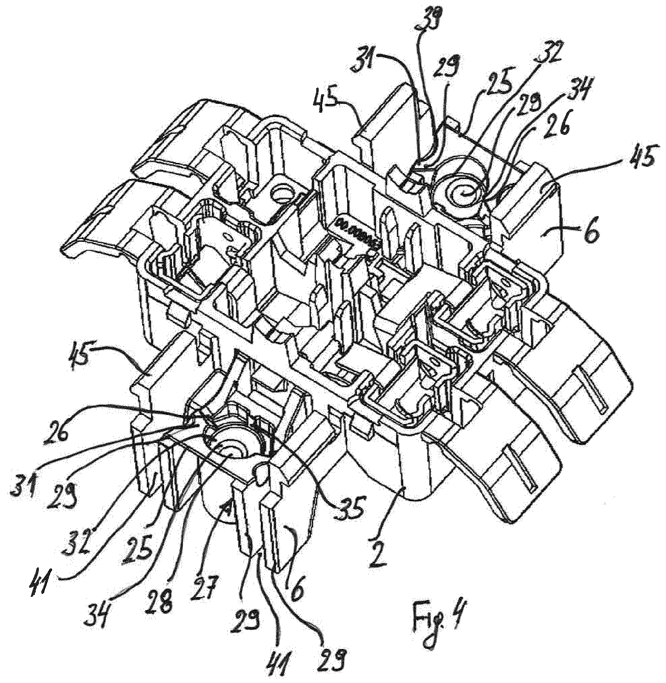

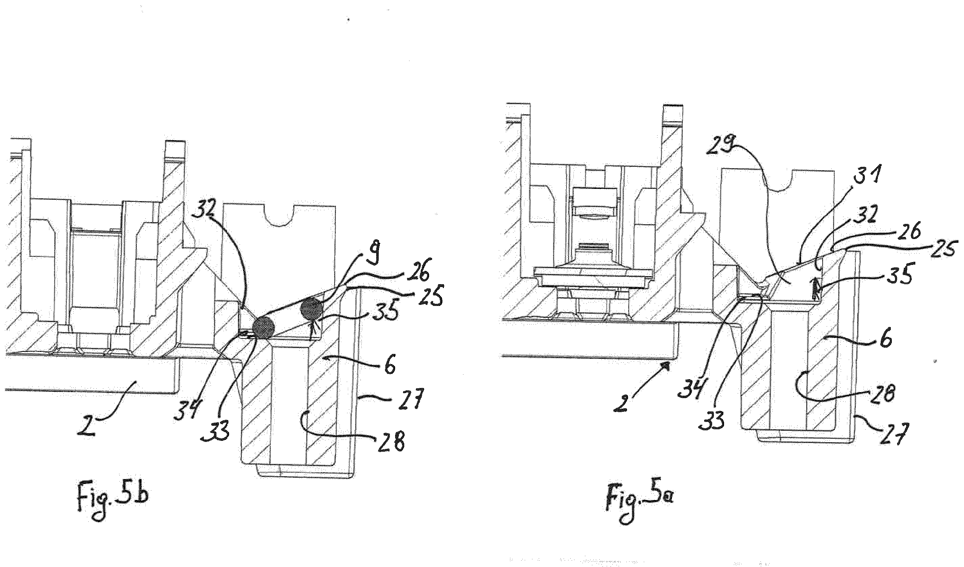

Die Montage eines erfindungsgemäßen Sockelunterteils 2 bzw. eines erfindungsgemäßen Sockelteils 1 mit der erfindungsgemäßen Spreizkrallenanordnung 4 ist wie folgt, siehe hierzu die Fig. 5a bis 5g.

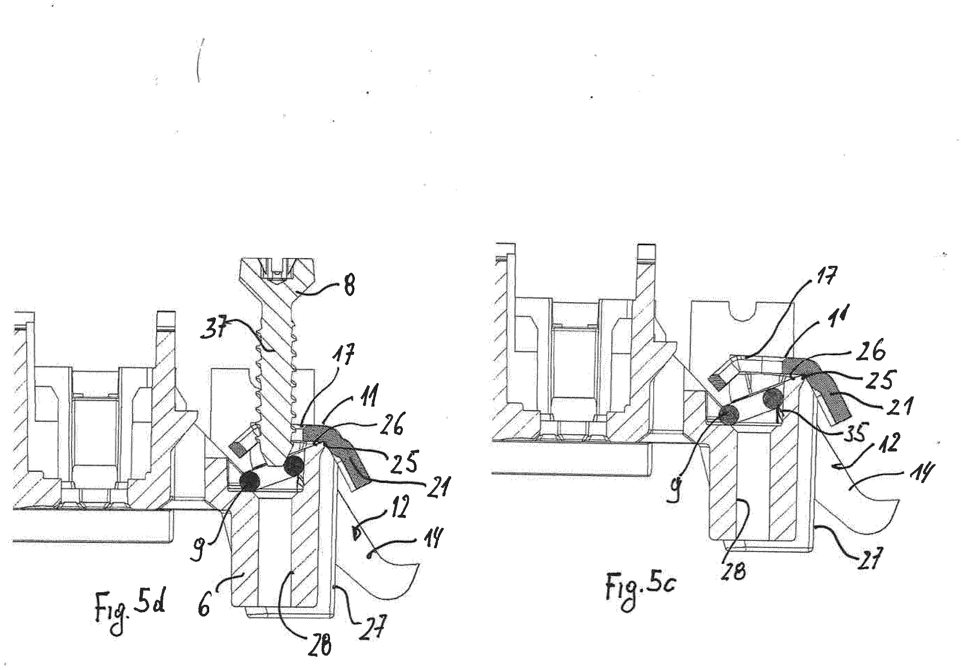

Zunächst wird das Mitnehmerteil 9, das in den Zeichnungen als O-Ring ausgebildet ist, in die Vertiefung 34 in der Grundfläche 33 der Ausnehmung 32 eingelegt. Hierbei nimmt auf Grund der vorstehenden Nase 35 das Mitnehmerteil 9 eine Schrägstellung durch teilweise Auflage auf der Nase 35 ein, siehe Fig. 5b. Danach wird auf die Oberfläche 26 des Lageransatzes 6 die Spreizkralle 7 mit ihrem Lagersteg 11 aufgelegt, siehe Fig. 5c. Die Spreizkralle 7 nimmt auf Grund der erfindungsgemäßen Schwerpunktlage der Spreizkralle 7 eine derartige horizontale Lage ein, dass das Langloch 17 horizontal verläuft, d. h. senkrecht zur Längsachse der Einschrauböffnung 28. Hierdurch wird ein ungehindertes Einführen der Spreizschraube 8 von oben ermöglicht. In diesem aufgelegten Zustand ragen die Krallenarme 12 mit ihrem zweiten Armabschnitt 14 zumindest teilweise gegenüber der äußeren Seitenwand 27 des Lageransatzes 6 nach außen vor. In dieser Lage verläuft die Lagerkante 25 im Winkelbereich des Lagerstegs 11 und des Stegfortsatzes 21.

Im folgenden Montageschritt erfolgt das Zuführen der Spreizschraube 8, indem diese mit ihrem Schraubenschaft 37 durch das Langloch 17 von oben hindurch gesteckt wird, siehe Fig. 5d.

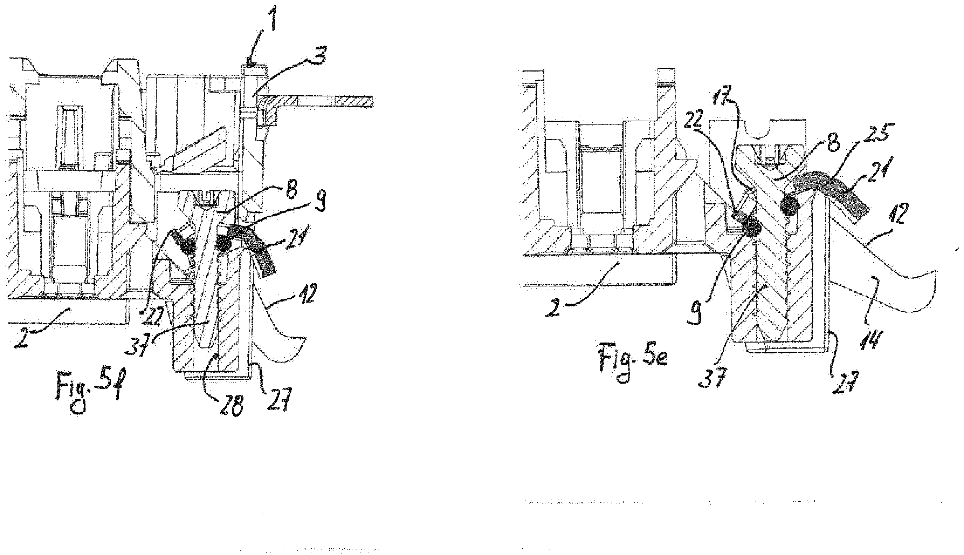

Danach wird die Spreizschraube 8 durch das Mitnehmerteil 9 hindurch und in die Einschrauböffnung 28 eingeschraubt. Dieses Einschrauben erfolgt bis zu einer Tiefen-Anschlagstellung. Diese Tiefen-Anschlagstellung ist diejenige Stellung, in der die Spreizschraube unter Zwischenlage des Mitnehmerteils 9 und des Lagerstegs 11 an der Grundfläche 33 mit dem Schraubenkopf 42 zur Anlage kommt. In dieser Tiefen-Anschlagstellung ist der Lagersteg 11 mit seinem Stegansatz 22 in die Ausnehmung 32 hinein geschwenkt, und zwar um die Lagerkante 25. In dieser Tiefen-Anschlagstellung sind die Krallenarme 12 maximal nach außen verschwenkt, siehe Fig. 5e. Wie in Fig. 5e zu erkennen ist, liegt der Lagersteg 11 an dem schräg verlaufenden Mitnehmerteil 9 an, so dass beide Teile die gleiche Neigung zur Längsachse des Schraubenschaftes besitzen. In der Tiefen-Anschlagstellung kann das Langloch 17 mit seinem den Krallenarmen 12 zugekehrten Rand an dem Schraubenschaft 37 anliegen.

Als nächster Montageschritt wird die Spreizschraube 8 wieder nach oben aus der Einschrauböffnung 28 teilweise herausgeschraubt, siehe Fig. 4f. Hierbei verschwenken die Krallenarme 12 in Richtung auf die äußere Seitenwand 27, und zwar um die Lagerkante 25.

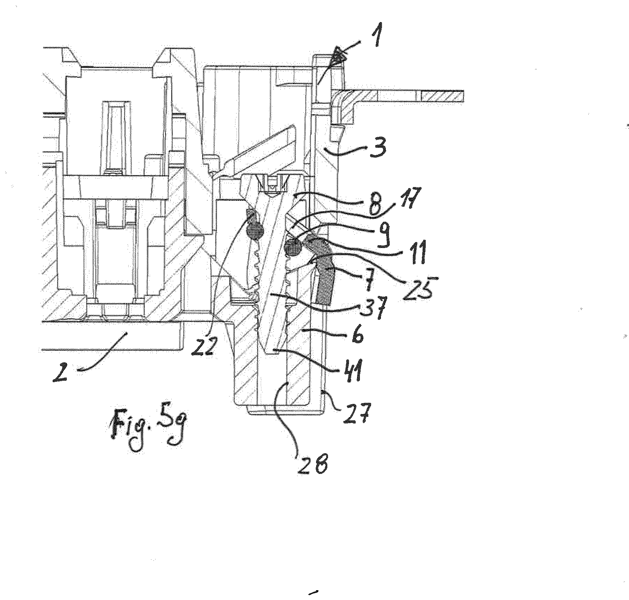

Wie in Fig. 5g gezeigt ist, erfolgt das Herausdrehen so weit, bis der Krallenarm 12 vollständig in das Sockelunterteil 2, d. h. in die Aufnahmenuten 41, eingeschwenkt ist. Diese Stellung stellt die Montagestellung dar. In dieser Montagestellung besitzt der Lagersteg 11 eine zur Tiefen-Anschlagstellung entgegengesetzte geneigte Anordnung. Auch das Mitnehmerteil 9 besitzt in dieser Montagestellung eine entgegengesetzt zur Tiefen-Anschlagstellung verlaufende geneigte Lage. Hierbei verlaufen das Mitnehmerteil 9 und der Lagersteg 11 wiederum parallel zueinander.

Wie in Fig. 5g dargestellt ist, befindet sich das Mitnehmerteil 9 in der Tiefen-Anschlagstellung unmittelbar unterhalb des Lagerstegs 11, so dass der Lagersteg 11 zwischen dem Mitnehmerteil 9 und dem Schraubenkopf 42 geführt und gehalten ist. Auf Grund der Materialbeschaffenheit, insbesondere der Elastizität und der Dimensionierung des Mitnehmerteils 9 sitzt dieses Mitnehmerteil 9 umfangsgemäß kraftschlüssig und in axialer Richtung des Schraubenschaftes 37 formschlüssig auf diesem. Dies bewirkt, dass beim Herausdrehen der Spreizschraube 8, siehe Fig. 5f, das Mitnehmerteil 9 auf dem Schraubenschaft fixiert bleibt und somit sich mit der Schraube nach oben bewegt. Hierdurch erfolgt eine Mitnahme der Spreizkralle 7 bzw. deren Lagerstegs 11 durch eine Kraftübertragung auf den Lagersteg 11, so dass die Spreizkralle 7 um die Lagerkante 25 aus der Ausnehmung 32 herausgeschwenkt wird. Dies bewirkt ein Verschwenken der Krallenarme 12 in die Aufnahmenuten 41. Somit bewirkt das Mitnehmerteil 9 bei einer Deinstallation des Sockelunterteils 2 bzw. des Sockelteils 1, dass die Spreizkralle 7 zurückgeschwenkt wird. Weiterhin sorgt das Mitnehmerteil 9 dafür, dass die erfindungsgemäße Spreizkrallenanordnung 4 auch bei einem Überdrehen der Spreizschraube 8, d. h. einem vollständigen Ausschrauben aus der Einschrauböffnung 28, nicht von der Spreizkralle 7 getrennt wird, so dass die Spreizschraube 8 unverlierbar gehalten wird.

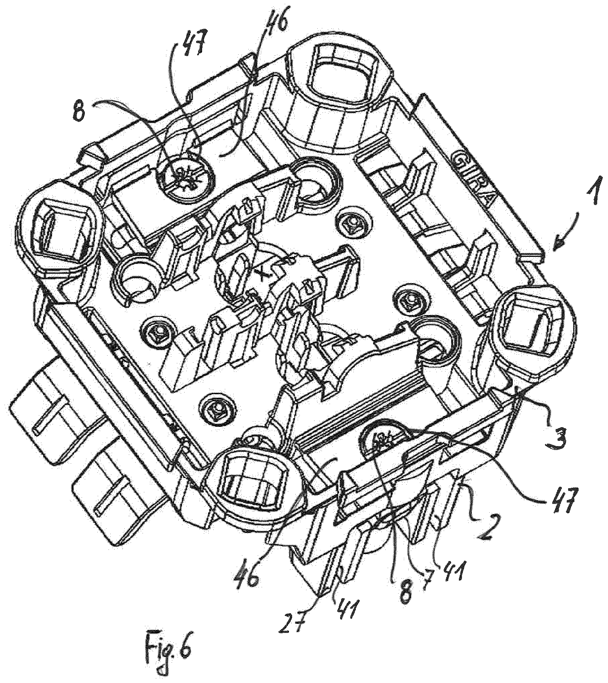

Nach der Montage der Spreizkrallenanordnung 4 gemäß den Fig. 5a bis 5g kann eine weitere Montage, z. B. von elektrischen Kontakten in dem Sockelunterteil 2 vorgenommen werden. Anschließend wird das Sockelunterteil 2 durch Aufsetzen des Sockeloberteils 3 mit diesem verbunden. Diese Verbindung kann z. B. als Rastverbindung zwischen diesen beiden Teilen ausgebildet sein. Hierzu können insbesondere am Sockelunterteil 2 am jeweiligen Lageransatz 6 nach oben, d. h. in Richtung auf das aufzusetzende Sockeloberteil 3 abstehende, flexible Rastfortsätze 45 angeformt sein, die mit am Sockeloberteil 3 ausgebildeten Rastnocken zusammenwirken, und diese im aufgesteckten Zustand des Sockeloberteils 3 rastend hintergreifen. Die Länge der Rastfortsätze 45 ist dabei derart, dass zwischen der Oberfläche 26 der Lageransätze 6 und dem aufgesetzten Sockeloberteil 3 ein derartiger Freiraum gebildet wird, dass in diesem Freiraum der nach oben verschwenkte Lagersteg 11 aufgenommen werden kann, wenn sich die Spreizkrallen in der Montagestellung befinden. Mittels am Sockeloberteil 3 im Bereich der Rastfortsätze 45 schwenkbar gelagerter Scharnierriegel 46 können die Rastfortsätze 45 in ihrer Raststellung fixiert werden. In der Raststellung verlaufen die Scharnierriegel parallel zur Oberseite des Sockeloberteils 3 und senkrecht zu den Rastfortsätzen 45. Hierbei sind die Scharnierriegel 46 in der Fixierstellung ihrerseits am Sockeloberteil 3 verrastet, siehe Fig. 6. Im Bereich zwischen den Rastfortsätzen 45 ist ein Aufnahmeraum für den Lagersteg 11 in seiner geschwenkten Stellung ausgebildet.

In der Montagestellung des Sockeloberteils 3 auf dem Sockelunterteil 2, siehe Fig. 5g, ist zwischen diesen beiden Teilen im Bereich der Lagerkante 25 des Sockelunterteils 2 ein Führungsspalt für den Durchtritt des Stegansatzes 21 ausgebildet, der derart bemessen ist, dass ein Bewegungsspiel für die um die Lagerkante 25 stattfindende Schwenkbewegung vorhanden ist, aber auch ein Niederhalten der Spreizkralle 7 durch das Sockeloberteil 3 bewirkt werden kann, so dass diese bei einer Ausschraubbewegung der Spreizschraube 8 in ihrer Schwenklage gehalten wird. Demnach erfolgt das Herausschrauben der Spreizschraube 8 gemäß den Fig. 5f und 5g zweckmäßiger Weise bei aufgesetztem Sockeloberteil 3.

Indem vorteilhafterweise das Mitnehmerteil 9, insbesondere das als O-Ring ausgebildete Mitnehmerteil 9, aus elastisch verformbarem Material besteht, wird auch ein Rappeln oder Klappern der Spreizkrallenanordnung 4 im gelösten Zustand verhindert.

Wie in Fig. 6 zu erkennen ist, sind in den Scharnierriegeln 46 Durchbrüche 47 vorgesehen, so dass ein freier Zugang zu den Schraubenköpfen 37 der Spreizschraube 8 im montierten Zustand des Sockeloberteils 3 möglich ist.

**Bezugszeichenliste**

| | | | |
|---|---|---|---|
| 1 | Sockelteil | 28 | Einschrauböffnung |
| 2 | Sockelunterteil | 29 | Querwände |
| 3 | Sockeloberteil | 31 | Wandkante |
| 4 | Spreizkrallenanordnung | 32 | Innere Ausnehmung |
| 6 | Lageransatz | 33 | Grundfläche |
| 7 | Spreizkralle | 34 | Vertiefung |
| 8 | Spreizschraube | 35 | Nase |
| 9 | Mitnahmeteil | 36 | Durchgangsloch |
| 11 | Lagersteg | 37 | Schraubenschaft |
| 12 | Krallenarm | 38 | Gewinde |
| 13 | Erster Armabschnitt | 39 | Einbuchtungen |
| 14 | Zweiter Armabschnitt | 41 | Aufnahmenut |
| 16 | Krallenspitze | 42 | Schraubenkopf |
| 17 | Langloch | 43 | Schraubenspitze |
| 18 | Vorderkante | 45 | Rastfortsätze |
| 19 | Rückkante | 46 | Scharnierriegel |
| 21 | Stegfortsatz | 47 | Durchbrüche |
| 22 | Stegansatz | | |
| 24 | Einprägung | | |
| 25 | Lagerkante | | |
| 26 | Oberfläche | | |
| 27 | Äußere Seitenwand | | |

## Patentansprüche

1. Sockelteil (1) für ein elektrisches Installationsgerät wie z. B. Lichtschalter oder Steckdose, umfassend ein Sockelunterteil (2) sowie mindestens eine an dessen Umfang angeordnete Spreizkrallenanordnung (4) mit einer Spreizkralle (7) und einer durch eine Öffnung (17) der Spreizkralle (7) verlaufenden, in das Sockelunterteil (2) eingeschraubten Spreizschraube (8), wobei die Spreizkralle (7) mit ihrem Lagersteg (11) derart mit der Spreizschraube (8) verbunden ist, dass durch Eindrehen der Spreizschraube (8) in das Sockelunterteil (2) eine gegenüber dem Sockelunterteil (2) umfangsgemäß vorstehende Spreizstellung der Spreizkralle (7) und durch Herausdrehen der Spreizschraube (8) eine umfangsgemäß versenkte Montagestellung der Spreizkralle (7) einstellbar ist, und wobei die Spreizkralle (7) in beiden Stellungen gegen Herausfallen aus dem Sockelunterteil (2) gesichert ist, wobei zwischen einem endseitigen Schraubenkopf (40) der Spreizschraube (8) und einem am Schraubenschaft (37) gelagerten Mitnehmerteil (9) der Lagersteg (11) geführt ist, wobei das Mitnehmerteil (9) am Schraubenschaft (37) befestigt ist,
**dadurch gekennzeichnet, dass**
die Öffnung (17) im Lagersteg (11) als Langloch ausgebildet ist, dessen Längsachse senkrecht zur Längsachse des Lagerstegs (11) verläuft, und das Mitnehmerteil (9) als O-Ring aus einem elastisch verformbaren Material ausgebildet ist, dessen Innendurchmesser kleiner ist als der Gewindeaußendurchmesser der Spreizschraube (8), und die Befestigung derart ist, dass der O-Ring umfangsgemäß kraftschlüssig und in axialer Richtung bedingt durch das Gewinde der Spreizschraube (8) auf dem Schraubenschaft (37) formschlüssig sitzt, wobei die Spreizschraube (8) als gewindeformende Schraube ausgebildet ist.

2. Sockelteil (1) nach Anspruch 1,
**dadurch gekennzeichnet, dass**
das Verhältnis des Innendurchmessers des O-Rings zum Gewindeaußendurchmesser der Spreizschraube (8) 1 : 2 ist.

3. Sockelteil (1) nach Anspruch 1 oder 2,
**dadurch gekennzeichnet, dass**
die Spreizschraube (8) ein mehrgängiges Gewinde, insbesondere ein dreigängiges Gewinde besitzt.

4. Sockelteil (1) nach einem der Ansprüche 1 bis 3,
**dadurch gekennzeichnet, dass**
zwei um 180 ° zueinander versetzt angeordnete Spreizkrallenanordnungen (4) vorhanden sind, die in Lageransätzen (6) des Sockelunterteils (2) gelagert sind.

5. Sockelteil (1) nach einem der Ansprüche 1 bis 4,
**dadurch gekennzeichnet, dass**
eine Vorderkante des Lagerstegs (11) einen Stegfortsatz (21) angeformt aufweist, der mit dem Lagersteg (11) einen stumpfen Winkel einschließt, so dass der Stegfortsatz (21) in Richtung auf den Lageransatz (6) gerichtet verläuft.

6. Sockelteil (1) nach einem der Ansprüche 1 bis 5,
**dadurch gekennzeichnet, dass**
am Lagersteg (11) ein Stegansatz (22), insbesondere dem Stegfortsatz (21) gegenüberliegend angeformt ist, indem sich das Langloch (17) erstreckt, und der nach unten in Richtung des Lageransatzes (6) derart geneigt abgewinkelt ist, dass er mit dem Lagersteg (11) einen stumpfen Winkel einschließt.

7. Sockelteil (1) nach einem der Ansprüche 1 bis 6,
**dadurch gekennzeichnet, dass**
der Lageransatz (6) des Sockelunterteils (2) eine vordere Lagerkante (25) am Übergang seiner Oberfläche (26) zu seiner äußeren Seitenwand (27) besitzt, und die Oberfläche (26) ausgehend von der Lagerkante (25) mit einer Neigung schräg nach innen in den Lageransatz (6) hinein verläuft.

8. Sockelteil (1) nach einem der Ansprüche 1 bis 7,
**dadurch gekennzeichnet, dass**
der Lageransatz (6) senkrecht zur Seitenwand (27) verlaufende Querwände (29) besitzt, deren obere Wandkante (31) entsprechend der Neigung der Oberfläche (26) verläuft und mit der Seitenwand (27) eine innere Ausnehmung (32) umschließt, die zur Aufnahme des Lagerstegs (11) in einer geschwenkten Stellung ausgebildet ist.

9. Sockelteil (1) nach Anspruch 8,
**dadurch gekennzeichnet, dass**
die Ausnehmung (32) in ihrer Grundfläche (33) eine Vertiefung (34) um eine in vertikaler Richtung verlaufende Einschrauböffnung (28) aufweist, die das Mitnehmerteil (9) aufnimmt.

10. Sockelteil (1) nach Anspruch 9,
**dadurch gekennzeichnet, dass**
die Vertiefung (34) ringförmig ausgebildet ist.

11. Sockelteil (1) nach Anspruch 9 oder 10,
**dadurch gekennzeichnet, dass**
unterhalb der Lagerkante (25) in der Vertiefung eine in Richtung auf die Lagerkante (25) vorstehende Nase (35) ausgebildet ist, die eine Schrägstellung des Mitnehmerteils (9) in der Vertiefung (34) im aufgelegten Zustand des Mitnehmerteils (9) bewirkt.

12. Sockelteil (1) nach einem der Ansprüche 1 bis 11,
**dadurch gekennzeichnet, dass**
die Spreizkralle (7) derart ausgebildet ist, dass sie im auf der Oberfläche (26) liegenden Zustand auf Grund einer Verteilung ihres Schwerpunktes eine horizontale Stellung einnimmt.

13. Sockelteil (1) nach einem der Ansprüche 1 bis 12,
**dadurch gekennzeichnet, dass**
das Sockelunterteil (2) seitlich der Querwände (29) Aufnahmenuten (41) zur versenkten Aufnahme der Spreizkralle (7) aufweist.

14. Sockelteil (1) nach einem der Ansprüche 1 bis 13,
**dadurch gekennzeichnet, dass**
auf dem Sockelunterteil (2) ein Sockeloberteil (3) rastend befestigt ist.

15. Sockelteil (1) nach Anspruch 14,
**dadurch gekennzeichnet, dass**
am Sockelunterteil (2) in Richtung auf das Sockeloberteil (3) gerichtete flexible Rastfortsätze (45) beidseitig des Lageransatzes (6) ausgebildet sind, wobei die Rastfortsätze (45) im aufgesetzten Zustand des Sockeloberteils (3) Rastnocken des Sockeloberteils (3) rastend hintergreifen.

16. Sockelteil (1) nach Anspruch 15,
**dadurch gekennzeichnet, dass**
am Sockeloberteil (3) im Bereich der Enden der Rastfortsätze (45) des Sockelunterteils (2) Scharnierriegel (46) schwenkbar gelagert sind, die in einer Schwenkstellung parallel zur Oberseite des Sockeloberteils (3) und senkrecht zu den Rastfortsätzen (45) diese in der Einraststellung fixieren.

17. Sockelteil (1) nach einem der Ansprüche 14 bis 16,
**dadurch gekennzeichnet, dass**
zwischen der Lagerkante (25) und dem Sockeloberteil (3) ein Führungsspalt für den Durchtritt des Stegfortsatzes (21) ausgebildet ist.

18. Sockelteil (1) nach einem der Ansprüche 15 bis 17,
**dadurch gekennzeichnet, dass**
im Bereich zwischen den Rastfortsätzen (45) ein Aufnahmeraum für den Lagersteg (6) in einer geschwenkten Stellung ausgebildet ist.

19. Sockelteil (1) nach einem der Ansprüche 3 bis 18,
**dadurch gekennzeichnet, dass**
die Spreizschraube (8) eine derartige Steigung besitzt, dass sie mit einer bis zwei Umdrehungen von ihrer Einschraubstellung in ihre Tiefen-Anschlagstellung und umgekehrt schraubbar ist.

## Claims

1. Base part (1) for an electrical installation device, such as a light switch or plug socket for example, comprising a base lower part (2) and also at least one expanding claw arrangement (4) which is arranged on the periphery of the said base lower part and has an expanding claw (7) and an expanding screw (8) which runs through an opening (17) in the expanding claw (7) and is screwed into the base lower part (2), wherein the expanding claw (7), by way of its bearing web (11), is connected to the expanding screw (8) in such a way that an expanding position of the expanding claw (7), which expanding position projects peripherally in relation to the base lower part (2), can be set by screwing the expanding screw (8) into the base lower part (2) and a peripherally recessed mounting position of the expanding claw (7) can be set by unscrewing the expanding screw (8), and wherein the expanding claw (7) is secured against falling out of the base lower part (2) in both positions, wherein the bearing web (11) is guided between an end-side screw head (40) of the expanding screw (8) and a driver part (9), which is mounted on the screw shaft (37), wherein the driver part (9) is fastened to the screw shaft (37),
**characterized in that**
the opening (17) in the bearing web (11) is in the form of an elongate hole of which the longitudinal axis runs perpendicular in relation to the longitudinal axis of the bearing web (11), and the driver part (9) is in the form of an O-ring which is composed of an elastically deformable material and of which the inside diameter is smaller than the thread outside diameter of the expanding screw (8), and the fastening is such that the O-ring is seated in a force-fitting manner at the periphery and in an interlocking manner on the screw shaft (37) in the axial direction owing to the thread of the expanding screw (8), wherein the expanding screw (8) is in the form of a thread-forming screw.

2. Base part (1) according to Claim 1,
**characterized in that**
the ratio of the inside diameter of the O-ring to the thread outside diameter of the expanding screw (8) is 1:2.

3. Base part (1) according to Claim 1 or 2,
**characterized in that**
the expanding screw (8) has a multi-start thread, in particular a three-start thread.

4. Base part (1) according to one of Claims 1 to 3,
**characterized in that**
there are two expanding claw arrangements (4) which are arranged offset through 180° in relation to one another and are mounted in bearing attachments (6) of the base lower part (2).

5. Base part (1) according to one of Claims 1 to 4,
**characterized in that**
a front edge of the bearing web (11) has a web projection (21) integrally formed on it, which web projection forms an obtuse angle with the bearing web (11), so that the web projection (21) runs in a manner directed in the direction of the bearing attachment (6).

6. Base part (1) according to one of Claims 1 to 5,
**characterized in that**
a web attachment (22) is integrally formed on the bearing web (11), in particular opposite the web projection (21), by the elongate hole (17) extending, and which web attachment is angled away in an inclined manner downwards in the direction of the bearing attachment (6) in such a way that it forms an obtuse angle with the bearing web (11) .

7. Base part (1) according to one of Claims 1 to 6,
**characterized in that**
the bearing attachment (6) of the base lower part (2) has a front bearing edge (25) at the transition of its surface (26) to its outer side wall (27), and the surface (26), starting from the bearing edge (25), runs with an inclination obliquely inwards into the bearing attachment (6).

8. Base part (1) according to one of Claims 1 to 7,
**characterized in that**
the bearing attachment (6) has transverse walls (29) which run perpendicular in relation to the side wall (27), the upper wall edge (31) of the said transverse walls running in a manner corresponding to the inclination of the surface (26) and enclosing an inner recess (32) with the side wall (27), the said inner recess being designed to receive the bearing web (11) in a pivoted position.

9. Base part (1) according to Claim 8,
**characterized in that**
the recess (32), in its base surface (33), has a recess (34) around a screw-in opening (28) which runs in the vertical direction and which accommodates the driver part (9) .

10. Base part (1) according to Claim 9,
**characterized in that**
the recess (34) is of annular design.

11. Base part (1) according to Claim 9 or 10,
**characterized in that**
a lug (35) which projects in the direction of the bearing edge (25) is formed below the bearing edge (25) in the recess, the said lug causing an oblique positioning of the driver part (9) in the recess (34) in the mounted state of the driver part (9).

12. Base part (1) according to one of Claims 1 to 11,
**characterized in that**
the expanding claw (7) is designed in such a way that it assumes a horizontal position in the state lying on the surface (26) on account of a distribution of its centre of gravity.

13. Base part (1) according to one of Claims 1 to 12,
**characterized in that**
the base lower part (2) has receiving grooves (41) for receiving the expanding claw (7) in a recessed manner to the side of the transverse walls (29).

14. Base part (1) according to one of Claims 1 to 13,
**characterized in that**
a base upper part (3) is fastened on the base lower part (2) in a latching manner.

15. Base part (1) according to Claim 14,
**characterized in that**
flexible latching projections (45) which are directed in the direction of the base upper part (3) are formed on both sides of the bearing attachment (6) on the base lower part (2), wherein the latching projections (45) engage behind latching cams of the base upper part (3) in a latching manner in the mounted state of the base upper part (3).

16. Base part (1) according to Claim 15,
**characterized in that**
hinge bolts (46) are pivotably mounted on the base upper part (3) in the region of the ends of the latching projections (45) of the base lower part (2), the hinge bolts, in a pivot position parallel to the top side of the base upper part (3) and perpendicular to the latching projections (45), fixing said latching projections in the latching position.

17. Base part (1) according to one of Claims 14 to 16,
**characterized in that**
a guide gap for the passage of the web projection (21) is formed between the bearing edge (25) and the base upper part (3).

18. Base part (1) according to one of Claims 15 to 17,
**characterized in that**
a receiving space for the bearing web (6) is formed in the region between the latching projections (45) in a pivoted position.

19. Base part (1) according to one of Claims 3 to 18,
**characterized in that**
the expanding screw (8) has an inclination such that it can be screwed from its screw-in position into its deep stop position, and vice versa, by one to two turns.

## Revendications

1. Partie de socle (1) pour un appareil d'installation électrique comme par exemple un interrupteur d'éclairage ou une prise électrique, comprenant une partie inférieure de socle (2) ainsi qu'au moins un dispositif de crampon écarteur (4) disposé sur sa circonférence avec un crampon écarteur (7) et une vis d'expansion (8) s'étendant à travers une ouverture (17) de crampon écarteur (7), vissée dans la partie inférieure de socle (2), dans laquelle le crampon écarteur (7) par son gradin de palier (11) est relié avec la vis d'expansion (8) de telle sorte que en tournant vers l'intérieur la vis d'expansion (8) dans la partie inférieure de socle (2) une position d'écartement du crampon écarteur (7) dépassant en saillie par rapport à la partie inférieure de socle (2) sur la circonférence peut être réglée et en tournant vers l'extérieur la vis d'expansion (8) une position de montage encastrée sur la circonférence du crampon écarteur (7) peut être réglée et dans lequel le crampon écarteur (7) est sécurisé dans les deux positions contre une chute hors de la partie inférieure de socle (2), dans laquelle entre une tête de vis du côté d'extrémité (40) de la vis d'expansion (8) et une partie de doigt d'entraînement (9) positionnée sur la tige de vis (37) le gradin de palier (11) est guidé, dans laquelle la partie de doigt d'entraînement (9) est fixée sur la tige de vis (37), **caractérisée en ce que** l'ouverture (17) dans le gradin de palier (11) est conçue comme un alésage oblong, dont l'axe longitudinal s'étend perpendiculairement à l'axe longitudinal du gradin de palier (11), et la partie de doigt d'entraînement (9) est conçue comme un joint torique d'un matériau déformable élastiquement, dont le diamètre intérieur est plus petit que le diamètre extérieur de filetage de la vis d'expansion (8) et la fixation est telle que le joint torique repose par complémentarité de force sur la circonférence et par complémentarité de forme sur la tige de vis (37) dans la direction axiale du fait du filetage de la vis d'expansion (8), dans laquelle la vis d'expansion (8) est conçue comme une vis formant un filetage.

2. Partie de socle (1) selon la revendication 1, **caractérisée en ce que** le rapport du diamètre intérieur du joint torique sur le diamètre de filetage extérieur de la vis d'expansion (8) est de 1 : 2.

3. Partie de socle (1) selon la revendication 1 ou 2, **caractérisée en ce que** la vis d'expansion (8) possède un filetage à plusieurs passes, notamment un filetage à trois passes.

4. Partie de socle (1) selon une des revendications 1 à 3, **caractérisée en ce que** deux agencements de crampons écarteurs disposés en décalage de 180° l'un par rapport à l'autre (4) sont présents, qui sont positionnés dans les bossages d'appui (6) de la partie inférieure de socle (2).

5. Partie de socle (1) selon une des revendications 1 à 4, **caractérisée en ce que** une arête avant du gradin de palier (11) présente un prolongement de gradin (21) façonné, qui définit avec le gradin de palier (11) un angle obtus, de sorte que le prolongement de gradin (21) s'étende en étant orienté dans la direction du bossage d'appui (6).

6. Partie de socle (1) selon une des revendications 1 à 5, **caractérisée en ce que** sur le gradin de palier (11) un prolongement de gradin (22), notamment façonné en vis-à-vis du prolongement de gradin (21) est façonné, en l'alésage oblong (17) s'étendant et qui est coudé en inclinaison vers le bas dans la direction du bossage d'appui (6), en définissant un angle obtus avec le gradin de palier (11).

7. Partie de socle (1) selon une des revendications 1 à 6, **caractérisée en ce que** le prolongement de gradin (6) de la partie inférieure de socle (2) possède une arête de palier avant (25) à la transition de sa surface (26) à sa surface latérale extérieure (27) et la surface (26) s'étend à partir de l'arête de palier (25) avec une inclinaison oblique vers l'intérieur dans le prolongement de gradin (6).

8. Partie de socle (1) selon une des revendications 1 à 7, **caractérisée en ce que** le prolongement de gradin (6) possède une paroi transversale (29) s'étendant perpendiculairement à la paroi latérale (27), dont l'arête murale supérieure (31) s'étend de manière correspondante à l'inclinaison de la surface (26) et ménage avec la paroi latérale (27) une cavité intérieure (32), qui est conçue afin de positionner le palier de gradin (11) dans une position pivotée.

9. Partie de socle (1) selon la revendication 8, **caractérisée en ce que** l'évidement (32) présente dans sa surface de base (33) une cavité (34) autour d'une ouverture de vissage (28) s'étendant dans la direction verticale, qui renferme la partie de doigt d'entraînement (9).

10. Partie de socle (1) selon la revendication 9, **caractérisée en ce que** la cavité (34) est conçue de forme annulaire.

11. Partie de socle (1) selon la revendication 9 ou 10, **caractérisé en ce que** au-dessous de l'arête de palier (25) dans la cavité un nez (35) dépassant en saillie dans la direction de l'arête de palier (25) est réalisé, qui provoque une position inclinée de la partie de doigt d'entraînement (9) dans la cavité (34) en l'état posé de la partie de doigt d'entraînement (9).

12. Partie de socle (1) selon une des revendications 1 à 11, **caractérisée en ce que** le crampon écarteur (7) est conçu de telle sorte qu'il adopte en l'état reposant sur la surface (26) en raison d'une répartition de son centre de gravité une position horizontale.

13. Partie de socle (1) selon une des revendications 1 à 12, **caractérisée en ce que** la partie inférieure de socle (2) présente latéralement aux parois transversales (29) des rainures de réceptacle (41) pour la réception encastrée du crampon écarteur (7) .

14. Partie de socle (1) selon une des revendications 1 à 13, **caractérisée en ce que** sur la partie inférieure de socle (2) une partie supérieure de socle (3) est fixée par encliquetage.

15. Partie de socle (1) selon la revendication 14, **caractérisée en ce que** sur la partie inférieure de socle (2) dans la direction des prolongements d'encliquetage flexibles (45) orientés dans la direction de la partie supérieure de socle (3) sont réalisés des deux côtés du prolongement de palier (6), dans laquelle les prolongements d'encliquetage (45) en l'état posé de la partie supérieure de socle (3) viennent en prise par encliquetage avec des cames d'encliquetage de la partie supérieure de socle (3).

16. Partie de socle (1) selon la revendication 15, **caractérisée en ce que** sur la partie supérieure de socle (3) au niveau des extrémités des prolongements d'encliquetage (45) de la partie inférieure de socle (2) des verrous à charnières (46) sont positionnés de manière pivotante, qui dans une position de pivotement parallèle au côté supérieur de la partie supérieure de socle (3) et perpendiculairement aux prolongements d'encliquetage (45) fixent ces derniers dans la position d'encliquetage.

17. Partie de socle (1) selon une des revendications 14 à 16, **caractérisée en ce que** entre l'arête de palier (25) et la partie supérieure de socle (3) un interstice de guidage pour le passage du prolongement de gradin (21) est réalisé.

18. Partie de socle (1) selon une des revendications 15 à 17, **caractérisée en ce que** dans la zone entre les prolongements d'encliquetage (45) un espace de réceptacle pour le gradin de palier (6) est réalisé dans une position pivotée.

19. Partie de socle (1) selon une des revendications 3 à 18, **caractérisée en ce que** la vis d'expansion (8) possède une inclinaison telle qu'elle puisse être vissée avec une à deux révolutions à partir de sa position de vissage dans sa position de butée en profondeur et inversement.
